(19) Europäisches Patentamt / European Patent Office / Office européen des brevets

(11) EP 4 691 856 A1

(12) EUROPEAN PATENT APPLICATION
published in accordance with Art. 153(4) EPC

(43) Date of publication:
11.02.2026 Bulletin 2026/07

(21) Application number: 23930481.9

(22) Date of filing: 29.03.2023

(51) International Patent Classification (IPC):
B60R 13/02 (2006.01)

(52) Cooperative Patent Classification (CPC):
B60R 13/02

(86) International application number:
PCT/JP2023/012962

(87) International publication number:
WO 2024/201843 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Kotobukiya Fronte Co., Ltd.
Tokyo 105-0003 (JP)

(72) Inventor: FUKUI, Kazuki
Gyoda-shi, Saitama 361-0021 (JP)

(74) Representative: Hoefer & Partner Patentanwälte
mbB
Pilgersheimer Straße 20
81543 München (DE)

(54) **VEHICLE INTERIOR MATERIAL AND SEAT BACK PANEL**

(57) A vehicle interior material is configured such that, when the Shore hardness is denoted as H (Hs), the thickness as d (mm), and the bending stiffness as K (MPa·mm4), an index $X = H \times K \times d^2$ is set to be less than an upper limit value determined according to required level of sewability for the vehicle interior material. Alternatively, the index X is set to be greater than 3500 and less than 54000. As a result, the vehicle interior material can achieve both the necessary rigidity and ease of sewing.

[Fig. 3]

EP 4 691 856 A1

## Description

### [Technical Field]

This application relates to a vehicle interior material and a seat back panel using the same.

### [Background Art]

For example, Patent Document 1 discloses a vehicle seat. A seatback of this vehicle seat includes a seat back board, and a cover member is sewn onto a rear cover portion of the seat back board. Patent Document 1 discloses that the rear cover portion of the seat back board is made of a resin material with a Shore hardness greater than 50 and is suitable for sewing.

### [Citation List]

### [Patent Literature]

[[Patent Literature 1] JP 2019-104403 A

### [Summary of the Invention]

### [Problem to be Solved by Invention]

Components having a structure in which surface materials are sewn onto vehicle interior materials made of resin or the like are used for various parts of a vehicle interior. One example is a vehicle seat, as described in Patent Document 1, where a cover member is sewn onto a resin seat back board. Thus, for components having a structure in which the surface materials are sewn onto vehicle interior materials, the vehicle interior materials used typically require high rigidity.

Additionally, in the case of the vehicle interior materials used with sewn the surface materials, ease of sewing is also important. For example, when attempting to sew the surface material onto a base material that is difficult to sew, such as resin materials, a sewing machine with extremely high penetration power is required. Additionally, it is necessary to slow down the sewing speed during the process, resulting in decreased work efficiency. Furthermore, the lifespan of needles used in the sewing machine becomes shorter. Therefore, from the perspective of reducing manufacturing costs, it is desirable that the vehicle interior material, to which the surface material is sewn, be easy to sew.

However, the rigidity and ease of sewing of the vehicle interior material are in a trade-off relationship. If the rigidity of the vehicle interior material is increased, it becomes more difficult to sew the surface material, making it difficult to balance both properties. In this regard, Patent Document 1 uses a sewable material with a Shore hardness of 50 or higher for the rear cover portion of the seat back board. However, it does not provide any solution to the difficulty of sewing the rear cover portion made of resin material.

In view of the above problems, it is an object of the present application to provide a vehicle interior material and a seat back panel in which both rigidity and ease of sewing are taken into consideration.

### [Means for Solving the Problem]

According to an embodiment of the present application, a vehicle interior material is configured such that, when the Shore hardness is denoted as H (Hs), the thickness as d (mm), and the bending stiffness as K (MPa·mm$^4$), an index X defined by the following formula (1) is set to be less than an upper limit value determined according to required level of sewability for the vehicle interior material.

[Formula 1]

$$\text{Index X} = \text{H} \times \text{K} \times \text{d}^2 \cdots (1)$$

Here, the vehicle interior material may be configured such that the index X is greater than a lower limit value set according to the rigidity required for the vehicle interior material.

In another embodiment of the present application, the vehicle interior material is configured such that the index X shown in the above formula (1) is less than 54000. Here, the vehicle interior material may be configured such that the index X is further greater than 3500.

The vehicle interior material related to these embodiments may have a Shore hardness H(Hs) value of 50 or greater. Furthermore, the vehicle interior material may be made of one or more of fibers, felt, foamed resin, and a hollow resin structure.

A seat back panel according to one embodiment of the present application is formed using a vehicle interior material according to any embodiment of the present application.

### [Effects of Invention]

The index X for the vehicle interior material is represented by Shore hardness H, thickness d, and bending stiffness K, and can be used as a value indicating level of ease of sewing. In other words, while keeping the values of Shore hardness H and bending stiffness K within an acceptable range, by further setting this index X within a specified range, the vehicle interior material and seat back panel can be made to possess both the necessary rigidity and ease of sewing.

### [Brief Description of Drawings]

[Fig. 1] Fig. 1 is a diagram showing the results of a puncture test for multiple substrate samples.

[Fig. 2] Fig. 2 is a diagram showing a table of values indicating characteristics of multiple substrate samples.

[Fig. 3] Fig. 3 is a diagram showing the relationship between index X and ease of sewing of a vehicle interior material according to an embodiment of the present application.

[Fig. 4] Fig. 4 is a schematic perspective view showing the overall configuration of a vehicle seat according to the embodiment of the present application.

[Fig. 5] Fig. 5 is a schematic front view showing a part of the rear side of a seat back panel according to the embodiment of the present application.

## [Detailed Description of Invention]

Hereinafter, embodiments of the vehicle interior material according to the present application will be described with reference to the drawings. In each figure, the same or corresponding parts are denoted by the same reference numerals, and their explanation is simplified or omitted.

## Embodiment.

As material for a substrate, which is a vehicle interior material according to the present embodiment, for example, fibers, felt such as compressed felt or knitted felt, foam resin such as urethane foam, and hollow resin structures (for example, honeycomb structures) can be used. Also, the substrate may have a structure in which two or more of these materials are laminated. Further, the substrate may be formed by covering these materials with a surface material. Examples of the surface material include synthetic leather containing PVC (polyvinyl chloride) or non-woven fabric. Here, synthetic leather containing PVC includes synthetic leather consisting solely of PVC, or synthetic leather with PVC as the main component. Synthetic leather with PVC as the main component includes, for example, those in which resins such as nylon or polyurethane are coated on the surface of PVC. The surface material may also be made of synthetic leather containing other materials such as PP (polypropylene), fibers including non-woven fabrics and woven fabrics, or natural leather.

The substrate is required to have necessary rigidity. Specifically, a Shore hardness of 50 or higher is preferable for the substrate, with an even higher hardness being preferable in some cases. The material of the aforementioned substrate is subjected to hardening treatment as necessary to achieve the required rigidity. Various methods for increasing the rigidity of these materials are well known and will not be explained here.

On the other hand, increasing the rigidity of the substrate reduces the ease of sewing on the substrate. Therefore, as the substrate used with a sewn surface material, merely increasing the rigidity is insufficient. The substrate as a vehicle interior material according to the present embodiment has the necessary rigidity while ensuring the ease of sewing.

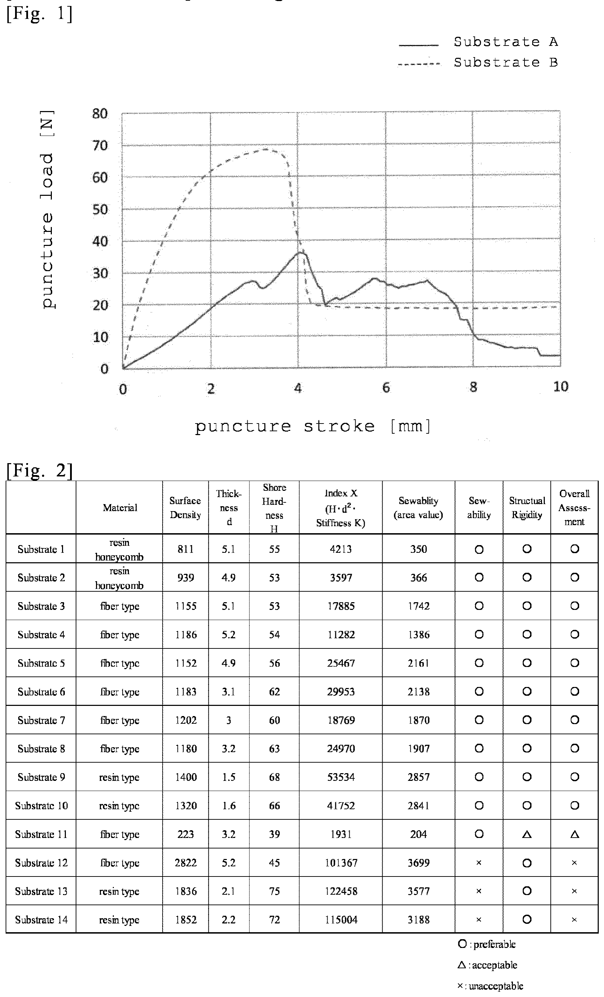

Here, the ease of sewing of the substrate can be confirmed by a puncture test. Fig. 1 is a diagram showing the results of the puncture test for two samples, substrate A and substrate B. In Fig. 1, the vertical axis represents the puncture load (N), and the horizontal axis represents the puncture stroke (mm). This puncture test was performed using a universal material testing machine (manufactured by Instron, model 3344) and a puncture jig (manufactured by Imada, TKS250N). The test speed in the puncture test is 50 (mm/min), the stroke is 0 to 10 (mm), and the size of each substrate sample is 60 (mm) $\times$ 60 (mm).

Substrate B, indicated by a dashed line, is a resin substrate with high rigidity. In this case of substrate B, especially, the puncture load until the puncture stroke exceeds 4 (mm), that is, until the puncture jig penetrates through the substrate B, is very high, and the frictional resistance after penetration is also relatively large. In other words, substrate B is considered to be a material that is relatively difficult to sew.

On the other hand, substrate A, indicated by a solid line, shows an overall lower puncture load compared to substrate B. Even near the stroke of 4 (mm) where the puncture load reaches its maximum, it remains less than half that of substrate B. Furthermore, even after the puncture load reaches its maximum, it remains relatively low.

It can be considered that the easier it is for a needle to penetrate the substrate, and the lower the frictional resistance after penetration, the easier the substrate is to sew. In other words, the integral value of the curve showing the change in the puncture load (N) from stroke 0 to 10 (mm) in Fig. 1, that is, the area value enclosed by the vertical axis, horizontal axis, and the curve indicating the puncture load (N) (hereinafter referred to simply as "area value"), is easier to sew when smaller and more difficult to sew when larger. The area value shown in Fig. 1 can be used as a value indicating the ease of sewing of the substrate. That is, it can be said that the smaller this area value is, the easier the substrate is to sew, whereas the larger the area value is, the more difficult the substrate is to sew.

Fig. 2 is a diagram showing a table of characteristic values for samples of multiple substrates in a table format. The table in Fig. 2 illustrates values indicating the ease of sewing (i.e., the aforementioned area values), which were obtained as a result of puncture tests conducted on the material samples of each substrate. In Fig. 2, substrate 2 and substrate 12 are identical to substrate A and substrate B in Fig. 1, respectively. Substrates 1 to 11 are substrates for vehicle interior materials related to the present application, while substrates 12 to 14 are conventional substrates used for vehicle interior materials.

In Fig. 2, although the conventional substrates 12 to 14 exhibit high rigidity, they have large area values indicating ease of sewing, and are therefore judged to have low sewability. Substrate 11, although having slightly lower rigidity, is a material that is sufficiently easy to sew. Substrate 11 can be used with reinforcement or other treatments applied as necessary, depending on the rigidity required for the component in which substrate 11 is used. Each of substrates 1 to 10 has a Shore hardness of 50 or more, sufficient rigidity as a vehicle interior material, and a sufficiently low area value indicating ease of sewing, thus can be said to be an easily sewable material. That is to say, they can be considered more preferable materials for use as vehicle interior materials.

The inventors of the present application repeatedly performed puncture tests on various substrates and, through extensive studies, discovered that the index X shown in the following formula (1) using Shore hardness correlates with the above-mentioned area value, that is, the ease of suturing the substrate.

[Formula 2]

$$\text{Index X} = H \times K \times d^2 \cdots (1)$$

Here, "H" is the Shore hardness (Hs) of the substrate, "d" is the thickness (mm) of the substrate, and "K" is the bending stiffness (MPa·mm$^4$) of the substrate.

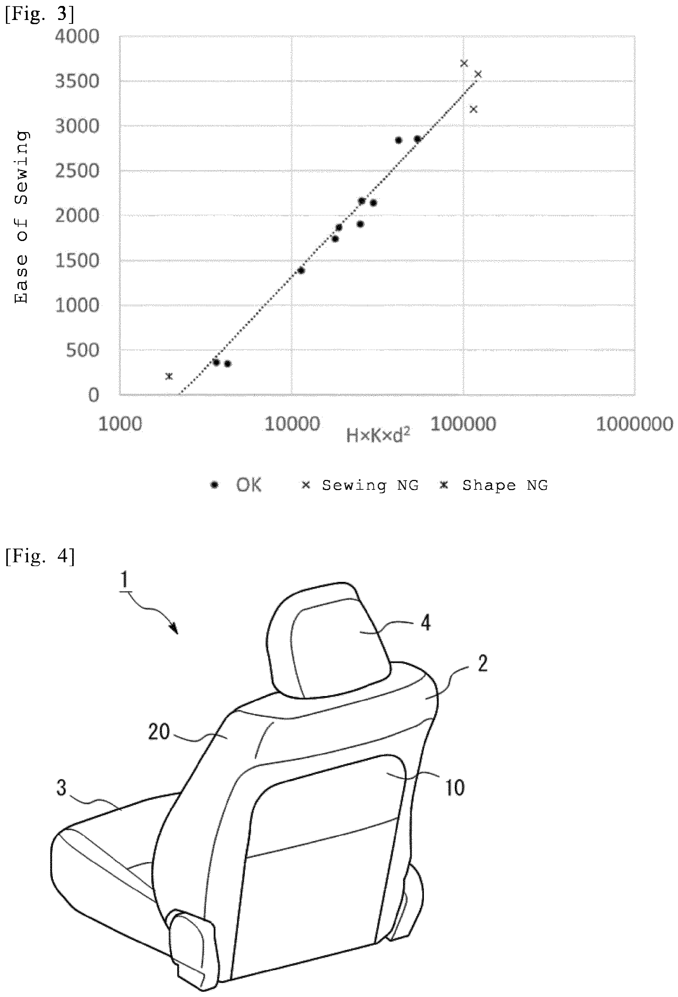

Fig. 3 is a diagram showing the relationship between the index X and ease of sewing. In Fig. 3, the horizontal axis represents index X, and the vertical axis represents ease of sewing, that is, the area value. From Fig. 3, it can be seen that the value indicating ease of sewing can be approximated by a linear function of index X.

In the present embodiment, a lower limit value $\alpha$ and an upper limit value $\beta$ are set for the index X within a range that ensures both the required rigidity and the required level of sewability. Furthermore, the substrate as the vehicle interior material according to the present embodiment satisfies the following formula (2) for the index X, thereby ensuring the necessary rigidity and ease of sewing.

[Formula 3]

$$\alpha < \text{Index X} = H \times K \times d^2 < \beta \cdots (2)$$

Incidentally, the index X is an indicator of ease of sewing, where a lower value indicates easier sewing, while a higher value indicates more difficult sewing. On the other hand, the index X is a value obtained by multiplying the Shore hardness H, the thickness d, and the bending stiffness K, all values correlating with rigidity. When the value of the index X is small, the rigidity tends to be low, and when the value of the index X is large, the rigidity tends to be high. Accordingly, the range represented by the index X can be set such that the lower limit value $\alpha$ is determined based on the required rigidity, and the upper limit value $\beta$ is determined based on the required level of sewability. Furthermore, the index X includes the thickness d of the substrate as a parameter. Therefore, for example, if there is any requirement for the thickness d of the substrate, the lower limit $\alpha$ and the upper limit $\beta$ can be set within a range that satisfies the required thickness d.

Furthermore, based on a result of the puncture tests conducted on substrates including the substrates shown in Fig. 2, the present inventors derived a more preferable range for the index X of the substrate, with a lower limit $\alpha$ of 3500 and an upper limit $\beta$ of 54000. That is, the substrate as the vehicle interior material according to the present embodiment is, more preferably, such that the index X satisfies the following formula (3).

[Formula 4]

$$3500 < H \times K \times d^2 < 54000 \cdots (3)$$

As explained above, by making the vehicle interior material satisfy the formula (2) or (3), it is possible to obtain the vehicle interior material that is easy to sew while ensuring the necessary rigidity. By using this vehicle interior material, it is possible to eliminate the need for a high-penetration sewing machine, improve the work efficiency of sewing the vehicle interior material, and extend the life of the sewing machine needles. Therefore, it can contribute to cost reduction of parts used in the vehicle interior.

Furthermore, in the above-described embodiments, explanations were provided for cases where the index X of the vehicle interior material is within a range indicated by a lower limit $\alpha$ and an upper limit $\beta$, or within a range greater than 3500 and less than 54000. However, for vehicle interior materials, it is sufficient if the index X is less than the upper limit $\beta$ or the value of 54000, and it is also acceptable if it is equal to or less than the lower limit $\alpha$ or 3500.

Fig. 4 is a schematic side view showing an example of a vehicle seat arranged inside a vehicle. The substrate as the vehicle interior material according to this embodiment is used, for example, as the material for the seat back panel 10 of the vehicle seat 1, as shown in Fig. 4.

The vehicle seat 1 in Fig. 4 comprises a seat back 2, a seat cushion 3, and a headrest 4. The seat back 2 is supported on the rear end portion of the seat cushion 3. The seat back 2 is for supporting the back of an occupant. The headrest 4 is disposed at the upper end portion of the seat back 2. The headrest 4 is for supporting the head of the occupant. The seat back 2 includes a seat back main body portion, which is not shown. The seat back main body portion may include cushioning materials such as pads and supporting frames. A seat back panel 10 is installed on the rear side of the seat back main body portion.

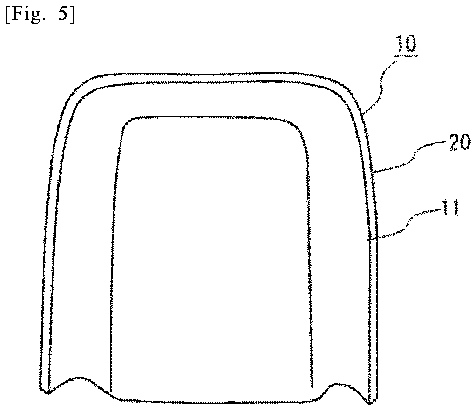

Fig. 5 is a schematic front view showing a part of the rear side of the seat back panel 10. As shown in Fig. 5, the seat fabric 20 is sewn to the sewing position 11 at the outer periphery of the seat back panel 10. The portion of the front side of the seat back main body that is not covered by the seat back panel 10 is covered by the seat fabric 20 sewn to the seat back panel 10.

In this embodiment, there is no particular limitation on the material forming the seat fabric 20. However, since the seat fabric 20 covers the portion that occupants come into contact with, it is preferable that the constituent material of the seat fabric 20 be selected in view of tactile feel and luxurious appearance. Specifically, for the seat fabric 20, for example, synthetic leather including PVC (polyvinyl chloride), or nonwoven fabric, etc. is used. Here, synthetic leather including PVC includes synthetic leather made solely of PVC, and synthetic leather with PVC as the main component. Synthetic leather with PVC as the main component includes, for example, those in which resins such as nylon or polyurethane are coated on the surface of the PVC. Additionally, the seat fabric 20 may also be made of synthetic leather, which includes other materials such as PP (polypropylene), fibers such as non-woven fabric and woven fabric, and natural leather.

By using the vehicle interior material of the present embodiment as the seat back panel 10, it is possible to ensure the necessary rigidity for the seat back panel 10 while facilitating the sewing of the seat fabric 20. This enables improved work efficiency in sewing operations during the manufacture of the seat back panel 10, thereby reducing the manufacturing cost of the seat back panel 10.

The vehicle interior material according to the present embodiment is not limited to being applied to the seat back panel 10, but may also be suitably used for other portions installed inside the vehicle, in which a surface material is sewn onto a substrate serving as a vehicle interior material. Specifically, the vehicle interior material may be used as a material constituting all or part of, for example, a dashboard, an instrument panel, a door trim, a pillar trim, and a rear parcel shelf, in addition to the seat back panel.

In the above embodiments, when referring to the numerical values of each element, such as quantity, amount, or range, the examples of the seat back panel and vehicle seat in this application are not limited to the mentioned numerical values, unless otherwise explicitly specified or inherently limited to the numerical values by its nature or principle In addition, the structures and the like described in the embodiments are not necessarily essential for the configuration of the seat back panel and the vehicle seat in this application, unless expressly stated or clearly specified by principles.

[Reference Signs List]

1   Vehicle seat
2   Seat back
3   Seat cushion
4   Headrest
10  Seat back panel
11  Sewing position
20  Seat fabric

**Claims**

1. A vehicle interior material configured such that an index X, defined by the following formula (1), is less than an upper limit value determined according to the required level of sewability for the vehicle interior material:

[Formula 1]

$$\text{Index X} = \text{H} \times \text{K} \times \text{d}^2 \cdots (1)$$

where Shore hardness is denoted as H (Hs), thickness is denoted as d (mm), and bending stiffness is denoted as K (MPa·mm$^4$).

2. The vehicle interior material according to claim 1, wherein the index X is greater than a lower limit value set according to the rigidity required for the vehicle interior material.

3. A vehicle interior material configured such that an index X, defined by the following formula (1), is less than 54000:

[Formula 2]

$$\text{Index X} = \text{H} \times \text{K} \times \text{d}^2 \cdots (1)$$

where Shore hardness is denoted as H (Hs), thickness is denoted as d (mm), and bending stiffness is denoted as K (MPa·mm$^4$).

4. The vehicle interior material according to claim 3, wherein the index X is greater than 3500.

5. The vehicle interior material according to any one of claims 1 to 4, wherein the Shore hardness H(Hs) value is 50 or more.

6. The vehicle interior material according to any one of claims 1 to 5, wherein the vehicle interior material is made of one or more of fibers, felt, foamed resin, and a hollow resin structure.

**EP 4 691 856 A1**

7. A seat back panel formed using the vehicle interior material according to any one of claims 1 to 6.

EP 4 691 856 A1

[Fig. 1]

_____ Substrate A
------- Substrate B

[Fig. 2]

|  | Material | Surface Density | Thick-ness d | Shore Hard-ness H | Index X (H·d²· Stiffness K) | Sewablity (area value) | Sew-ability | Structual Rigidity | Overall Assess-ment |
|---|---|---|---|---|---|---|---|---|---|
| Substrate 1 | resin honeycomb | 811 | 5.1 | 55 | 4213 | 350 | O | O | O |
| Substrate 2 | resin honeycomb | 939 | 4.9 | 53 | 3597 | 366 | O | O | O |
| Substrate 3 | fiber type | 1155 | 5.1 | 53 | 17885 | 1742 | O | O | O |
| Substrate 4 | fiber type | 1186 | 5.2 | 54 | 11282 | 1386 | O | O | O |
| Substrate 5 | fiber type | 1152 | 4.9 | 56 | 25467 | 2161 | O | O | O |
| Substrate 6 | fiber type | 1183 | 3.1 | 62 | 29953 | 2138 | O | O | O |
| Substrate 7 | fiber type | 1202 | 3 | 60 | 18769 | 1870 | O | O | O |
| Substrate 8 | fiber type | 1180 | 3.2 | 63 | 24970 | 1907 | O | O | O |
| Substrate 9 | resin type | 1400 | 1.5 | 68 | 53534 | 2857 | O | O | O |
| Substrate 10 | resin type | 1320 | 1.6 | 66 | 41752 | 2841 | O | O | O |
| Substrate 11 | fiber type | 223 | 3.2 | 39 | 1931 | 204 | O | △ | △ |
| Substrate 12 | fiber type | 2822 | 5.2 | 45 | 101367 | 3699 | × | O | × |
| Substrate 13 | resin type | 1836 | 2.1 | 75 | 122458 | 3577 | × | O | × |
| Substrate 14 | resin type | 1852 | 2.2 | 72 | 115004 | 3188 | × | O | × |

O : preferable

△ : acceptable

× : unacceptable

7

[Fig. 3]

[Fig. 4]

[Fig. 5]

## INTERNATIONAL SEARCH REPORT

| International application No. |
|---|
| **PCT/JP2023/012962** |

| A. | CLASSIFICATION OF SUBJECT MATTER |
|---|---|

*B60R 13/02*(2006.01)i
FI:   B60R13/02 Z

According to International Patent Classification (IPC) or to both national classification and IPC

| B. | FIELDS SEARCHED |
|---|---|

Minimum documentation searched (classification system followed by classification symbols)

B60R13/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2019-104403 A (TACHI S CO.) 27 June 2019 (2019-06-27)<br>paragraph [0021], fig. 1 | 1-7 |
| A | JP 2013-515640 A (BOSHOKU AUTOMOTIVE EUROPE GMBH) 09 May 2013 (2013-05-09)<br>entire text, all drawings | 1-7 |

☐ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/012962**

| Patent document cited in search report | | | Publication date (day/month/year) | Patent family member(s) | | | Publication date (day/month/year) |
|---|---|---|---|---|---|---|---|
| JP | 2019-104403 | A | 27 June 2019 | US | 2019/0176665 | A1 | |
| | | | | paragraph [0027], fig. 1 | | | |
| JP | 2013-515640 | A | 09 May 2013 | WO | 2011/076483 | A1 | |
| | | | | entire text, all drawings | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019104403 A